# EUROPEAN PATENT SPECIFICATION

(11) **EP 2 472 244 B1**
(45) Date of publication and mention of the grant of the patent: **07.10.2015**
(21) Application number: 11382024.5
(22) Date of filing: 08.02.2011
(51) Int. Cl.: B82Y 35/00, G01N 25/00, G01N 30/00, G01N 15/00, G01N 15/06

(54) **thermogravitational column for measuring the properties of gaseous fluids comprising nanoparticles**
Thermogravitational Säule zur Messung der Eigenschaften von gasförmigen Fluiden mit Nanopartikeln
Colonne thermo-gravitationnelle pour mesurer les propriétés de fluides gazeux comprenant des nanoparticules

(30) Priority: 28.12.2010 ES 201031973
(43) Date of publication of application: 04.07.2012
(73) Proprietor: Mondragon Goi Eskola Politeknikoa Jose Maria Arizmendiarrieta, S.COOP., 20500 Arrasate (Guipuzcoa) (ES)
(72) Inventor: Santamaría Viniegra, Jon, 26006 Logrono (ES); Bou-Ali Saidi, Mohammed Mounir, 48230 Elorrio (ES); del Teso Sánchez, Karmele, 20550 Aretxabaleta (ES)
(74) Representative: Igartua, Ismael

(56) References cited:
- Akira Toda ET AL: "Accurate measurement of thermophoretic effect in microgravity", The Journal of Chemical Physics, 22 October 1996 (1996-10-22), pages 7083-7087, XP055114775, DOI: 10.1063/1.472510 Retrieved from the Internet: URL:http://link.aip.org/link/?JCPSA6/105/7 083/1 [retrieved on 2014-04-22]
- J. F. DUTRIEUX ET AL: "On the Measurement of Positive Soret Coefficients", THE JOURNAL OF PHYSICAL CHEMISTRY B, vol. 106, no. 23, 1 June 2002 (2002-06-01) , pages 6104-6114, XP055114478, ISSN: 1520-6106, DOI: 10.1021/jp013945r
- ZHENG F: "Thermophoresis of spherical and non-spherical particles: a review of theories and experiments", ADVANCES IN COLLOID AND INTERFACE SCIENCE, vol. 97, no. 1, 2002, pages 255-278, XP028149118, ISSN: 0001-8686, DOI: 10.1016/S0001-8686(01)00067-7 [retrieved on 2011-02-22]

## Description

### TECHNICAL FIELD

This invention relates to thermogravitational columns for measuring the properties of fluids, and in particular to thermogravitational columns for measuring the properties of gaseous fluids comprising nanoparticles.

### PRIOR ART

The transport properties of fluids, which are determined by means of the application of the thermogravitational technique, result from the combination of the thermal gradient effect (thermal diffusion), the difference in concentration (molecular diffusion) and the difference in convection (gravitational field). Transport processes caused by the phenomenon of thermodiffusion have become especially useful in problems as wide-ranging as: the analysis of hydrodynamic instability, the transport of matter in organisms, or in certain practical problems such as the fractioning of polymers and modelling in the optimal exploitation of oilfields. The use of thermal diffusion is also arousing great interest today in environmental problems, such as the aerosol disposals or thermophoresis.

From an industrial viewpoint, the importance of thermodiffusion in a gaseous fluid or nanoparticle aerosol in a controlled environment lies in the need to determine the distribution of the nanoparticles contained in the aerosol.

The phenomenon of thermodiffusion was observed for the first time by Ludwig, who discovered that a temperature gradient caused a redistribution of the concentration, this being subsequently analysed by Soret. The relevant magnitude in the description of the phenomenon is the Soret coefficient, given that S_{T}=D_{T}/D, where D_{T} is the thermal diffusion coefficient and D the ordinary or molecular diffusion coefficient. The prior art contains two experimental procedures for determining the Soret coefficient based on a purely non-convective and a purely convective regime. The first case corresponds to the thermal diffusion cell and the second to the continuous flow cell. The measurements carried out in these separation cells may be seriously affected by the presence of convective disturbances caused by hydrodynamic instability or by the existence of lateral temperature gradients. With a view to preventing these disturbances, the separation in microgravity has recently been measured and the transport coefficients of mixtures in these conditions determined. Although the results are not conclusive, they seem to provide significant differences with values obtained on the Earth's surface.

At the same time, improvements have been made in non-convective experimental columns and optical analysis methods have been refined. The effect has been so small, however, particularly in separation, that most of the experimental measurements obtained with these techniques are largely inaccurate.

In contrast, in the thermogravitational column, the effect of basic separation by thermal diffusion is combined with vertical convective currents, giving rise to amplified separation between the ends of the column, which may be both positive and negative. In positive separation it is the less dense component of a binary mixture that moves towards the hot wall, causing enrichment in the top part of the cell, while the denser component is enriched in the bottom part, with the result that both the Soret coefficient and the thermal diffusion coefficient are positive. In the case of negative separation, however, it is the denser component that is found in the top part of the column, giving rise to a potentially unstable separation, as a result of which both S_{T} and D_{T} are negative.

The results reveal several advantages of this method, for example, stationary separation is independent of the thermal gradient, as a result of which exact monitoring of the temperatures is not required. In addition, the method can be made more sensitive by reducing the width of the work space in the case of cylindrical columns and increasing it to create absolute separations in the case of flat inclined columns. In the case of negative separations, an adverse density gradient has also been established, by working at all times at several orders of magnitude above the critical Grashof number. Furthermore, the reproducibility of experimental measurements obtained by means of this method points to the possibility of using the thermogravitational method to determine transport properties for liquid mixtures, both in flat configurations such as cylinders at different aspect ratios, and even in new experiment procedures, such as laser velocimetry.

From its first applications, in which the objective was to achieve the separation of isotopes, to the range of possibilities of applications performed today (from the field of geophysics to that of metallurgy), the suitability and range of options offered by the application of the thermogravitational technique has been demonstrated.

In addition, for the embodiment of the tests the thermogravitational technique is the most suitable of all existing techniques for determining transport properties in fluid.

Document ES 2330905 B1 discloses an installation adapted for supporting tests at high and low pressures, which enables its use with all types of fluids, both in a liquid state and liquefied gases.

The document "On the Measurement of Positive Soret Coefficients", J. F. Dutrieux et al., The Journal of Physical Chemistry B, vol. 106, no. 23, 1 June 2002 (2002-06-01), pages 6104-6114, XP055114478, discloses a thermogravitational column for preparing a measurement of the properties of liquids comprising nanoparticle, submitted to a temperature gradient.

The document "Accurate measurement of thermophoretic effect in microgravity", Akira Toda et al., The Journal of Chemical Physics, 22 October 1996 (1996-10-22), pages 7083-7087, XP055114775, discloses a cell for preparing a measurement of the properties of gaseous fluids comprising nanoparticles, where measurement fields with temperature gradient are established between two metal plates.

### BRIEF DISCLOSURE OF THE INVENTION

It is an object of this invention to provide a thermogravitational column for measuring the properties of fluids, as described in the claims.

The column of the invention comprises an inclusion block and an extraction block facing and joined to each other, a main chamber defined between said blocks, where the gaseous fluid to be analysed is disposed, and at least one opening and closure system adapted to divide the main opening and closure system is acted on, this causes the division of the main chamber into a plurality of auxiliary chambers, insulated in a sealed manner from each other, and if gaseous fluid is extracted from one of the auxiliary chambers, the nanoparticle concentration of the rest of auxiliary chambers is not affected and can subsequently be measured, thereby enabling the properties of the gaseous fluid in different areas of the main chamber to be measured correctly.

It is another object of this invention to provide a method for measuring the properties of gaseous fluids with a thermogravitational column, as described in the claims.

These and other advantages and characteristics of the invention will be made evident in the light of the drawings and the detailed description thereof.

### DESCRIPTION OF THE DRAWINGS

Figure 1 a shows a front view in perspective of a preferred embodiment of the column of the invention.
Figure 1b shows a rear view in perspective of the column of Figure 1 a.
Figure 2 shows an exploded view of the column of Figure 1 a or of Figure 1b, without opening and closure systems.
Figure 3 is a cross-sectional and partial side view of the column of Figure 1 a or of Figure 1b.
Figure 4 is a perspective view of an external plate of an extraction block of the column of Figure 1 a or of Figure 1 b.
Figure 5 is a perspective view of an internal plate of the extraction block of the column of Figure 1 a or of Figure 1 b.
Figure 6 is a perspective view of an external plate of an inclusion block of the column of Figure 1 a or of Figure 1 b.
Figure 7 is a perspective view of an internal plate of the inclusion block of the column of Figure 1 a or of Figure 1 b.
Figure 8 is a perspective view of an intermediate plate of the column of Figure 1a or of Figure 1b.
Figure 9 is a perspective view and in explosion of an opening and closure system of the column of Figure 1 a or of Figure 1 b.

### DETAILED DISCLOSURE OF THE INVENTION

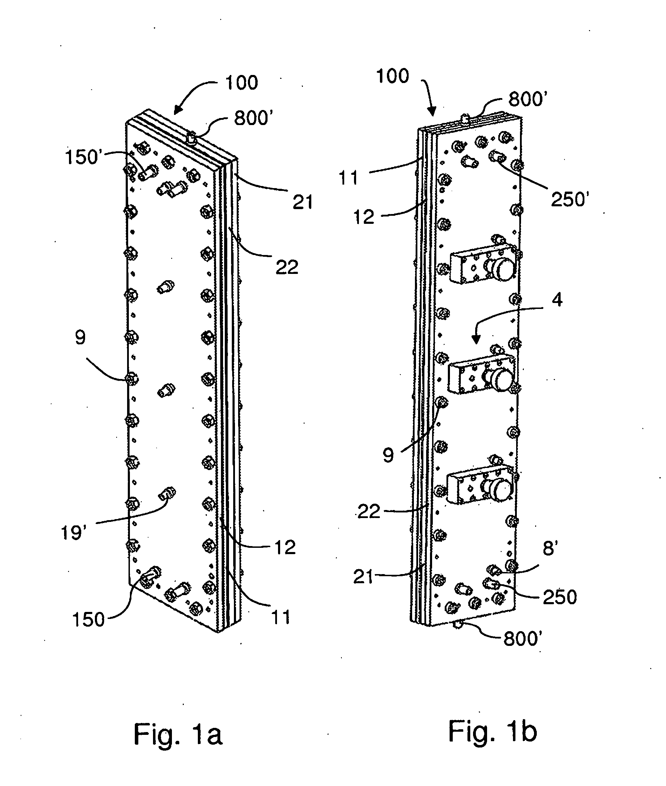

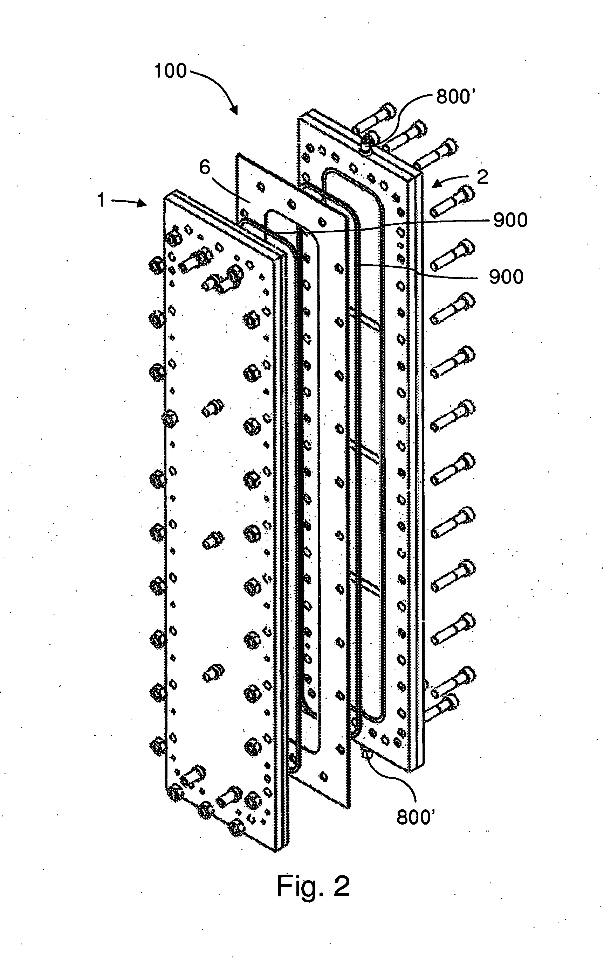

One aspect of the invention relates to a thermogravitational column 100, which is designed for use in systems adapted for measuring the properties of a gaseous fluid composed of nanoparticles, said properties being capable of being measured at different heights of said column 100, the preferred embodiment of which is shown in Figures 1 a and 1 b, and in an exploded view in Figure 2. The gaseous fluid preferably corresponds with an aerosol, which comprises pure air and nanoparticles of a certain composition whose properties are to be analysed, such as sodium chloride, although it can be any other composition whose properties are to be analysed, in the form of liquid or in even in the form of a solid.

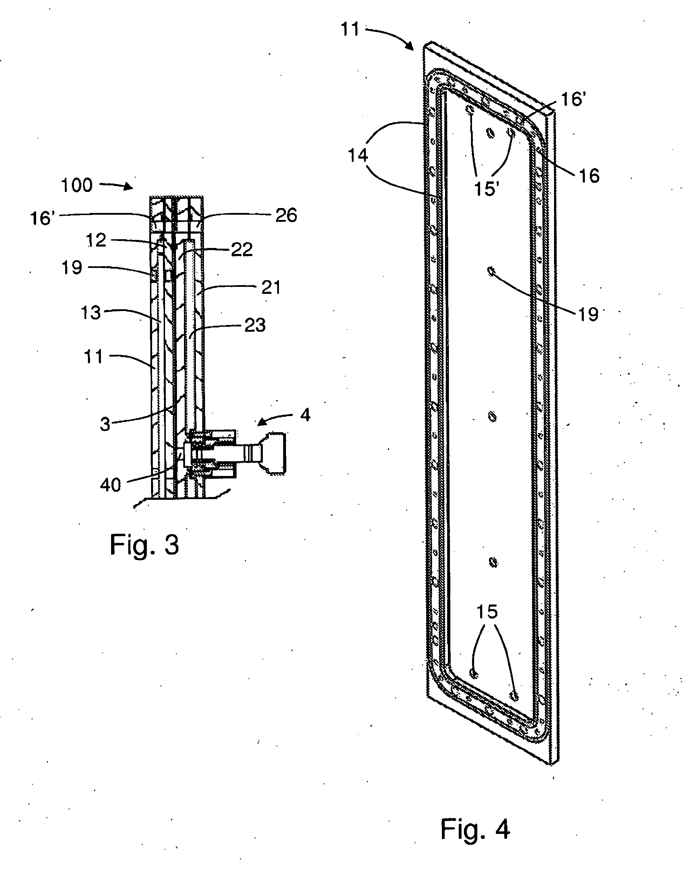

The column 100 comprises an extraction block 1 and an inclusion block 2 facing and joined to each other, which preferably comprise a substantially rectangular shape, a main chamber 3 defined between said blocks 1 and 2 shown in Figure 3, where the gaseous fluid to be analysed is disposed, and at least one opening and closure system 4 adapted to divide the main chamber 3 into a plurality of auxiliary chambers insulated in a sealed manner from each other when the gaseous fluid is disposed, and in equilibrium, in said main chamber 3. The blocks 1 and 2 are disposed in such a way that the main chamber 3 is disposed substantially vertically, gravity thereby playing an important role in the redistribution of the nanoparticles. As a result, when the gaseous fluid is disposed in its interior the nanoparticles of said gaseous fluid are distributed all along the height of said main chamber 3 up to a specific moment of equilibrium, there being three different concentrations of particles at different heights of said main chamber 3 due to the thermogravitational effect - the specific moment of equilibrium from which the concentrations of nanoparticles do not vary - said gaseous fluid being, therefore, in equilibrium from said moment.

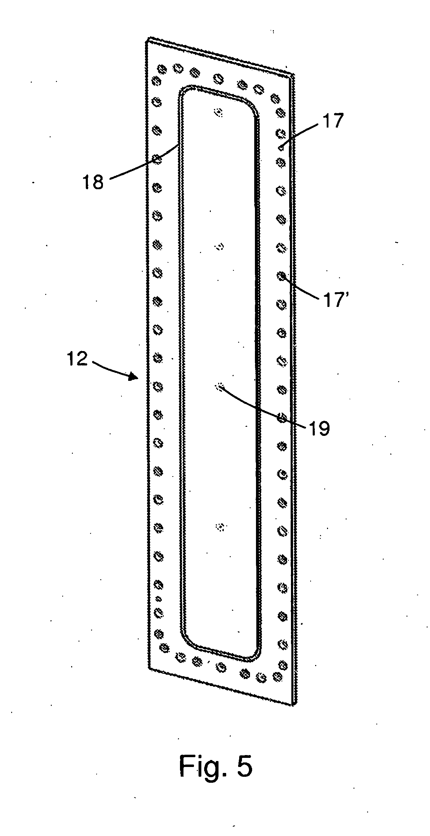

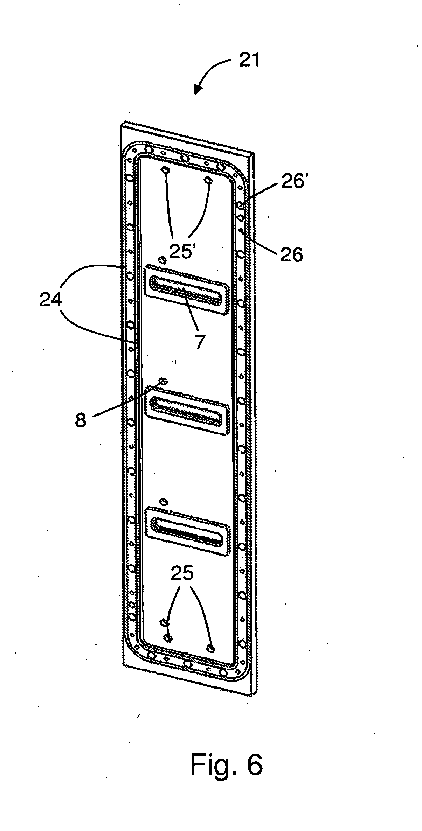

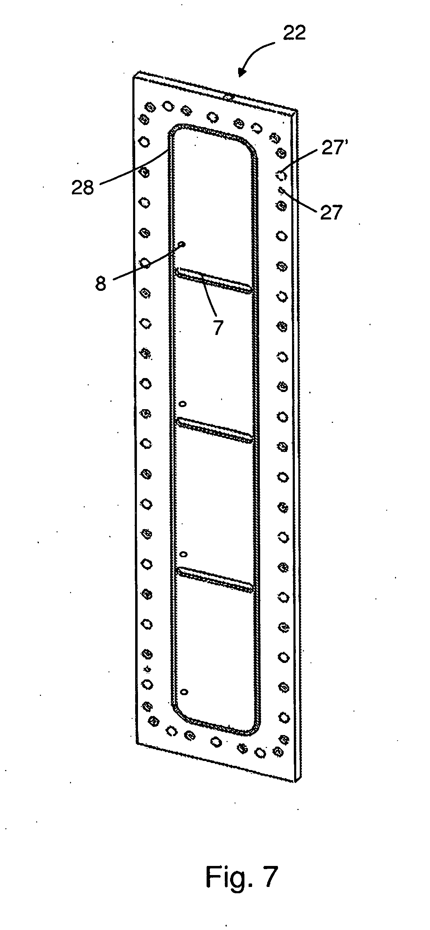

Each block 1 and 2 comprises an external element 11, 21 and an internal element 12, 22 facing and joined to each other, shown separately in Figures 4 and 5 for the extraction block 1 and in Figures 6 and 7 for the inclusion block 2. Said elements 11, 12, 21 and 22 are preferably made of aluminium, mainly because of the fact that aluminium does not oxidise when water flows through it as it has already been oxidised; the fact that it is a material with low mechanical resistance, which makes machining easier; the fact that its thermal conductivity is sufficiently high to generate a thermal gradient as efficiently as possible; and to the fact that it is a material that allows an anodising treatment (a treatment by which the quality of a surface is improved and does not conduct electricity), which can be important in surfaces in which the aluminium comes into contact with gaseous fluid.

Between the elements 11 and 12, 21 and 22 of each block 1 and 2 is delimited a respective chamber 13 and 23. The external elements 11 and 21 comprise a housing 14 and 24 on the surface facing the internal elements 12 and 22, for housing at least one perimeter insulation member not shown in the figures, preferably a viton O-ring, the chambers 13 and 23 being delimited by the corresponding insulation member. Each chamber 13 and 23 is adapted to house an auxiliary fluid, and is communicated with the exterior by at least one respective hole 15 and 15', and 25 and 25', the auxiliary fluid being introduced into said chamber 13 and 23 through a corresponding hole 15 and 25, the leakage of which from said chamber 13 and 23 is prevented thanks to the insulation member, and said auxiliary fluid being extracted from the chamber 13 and 23 through its corresponding additional hole 15' and 25'. Preferably, and in addition, the holes 15 and 25 through which the auxiliary fluid is introduced are disposed beneath the additional holes 15' and 25' through which it is extracted. In the chamber holes 15 and 25 is preferably housed a joint member 150 and 250 through which the auxiliary fluid that is introduced into the corresponding chamber 13 and 23 passes, and in the additional holes 15' and 25' is preferably housed a joint member 150' and 250' through which the auxiliary fluid that is extracted from the corresponding chamber 13 and 23 passes.

A hot auxiliary fluid is introduced into the chamber 13 of the extraction block 1, while a cold auxiliary fluid is introduced into the chamber 23 of the inclusion block 2 (or vice versa), with the result that a temperature gradient is obtained in the main chamber 3.

The external element 11 and 21 comprises a plurality of connecting holes 16 and 26 outside the space defined by the corresponding chamber 13 and 23, as shown in Figures 4 and 6, and the internal plates 12 and 22 comprise corresponding connecting holes 17 and 27, both elements 11 and 12, 21 and 22 being joined together to from the blocks 1 and 2 by means of the insertion of connecting elements not shown in the Figures, such as screws, in said corresponding connecting holes 16 and 17, and 26 and 27. Said elements 11, 12, 21 and 22 also comprise, also outside the space defined by the corresponding chamber 13 and 23, a plurality of connecting holes 16', 17', 26' and 27' that are passed through by connecting means 9, the blocks 1 and 2 thus being joined together. As shown in Figures, the connecting holes 16', 17', 26' and 27' preferably comprise a greater diameter than the connecting holes 16, 17, 26 and 27.

Each internal element 12 and 22 comprises a housing 18 and 28 on the surface opposite the external elements 11 and 21 where an insulation member 900 that preferably corresponds with a viton O-ring is disposed, the main chamber 3 being defined between both internal elements 12 and 22 in the space delimited by said insulation member 900. The insulation member 900 prevents the gaseous fluid from escaping from said main chamber 3.

The extraction block 1 comprises at least one filling hole through which the gaseous fluid is introduced from the exterior to the main chamber 3, through an inclusion joint member 800' disposed in said filling hole.

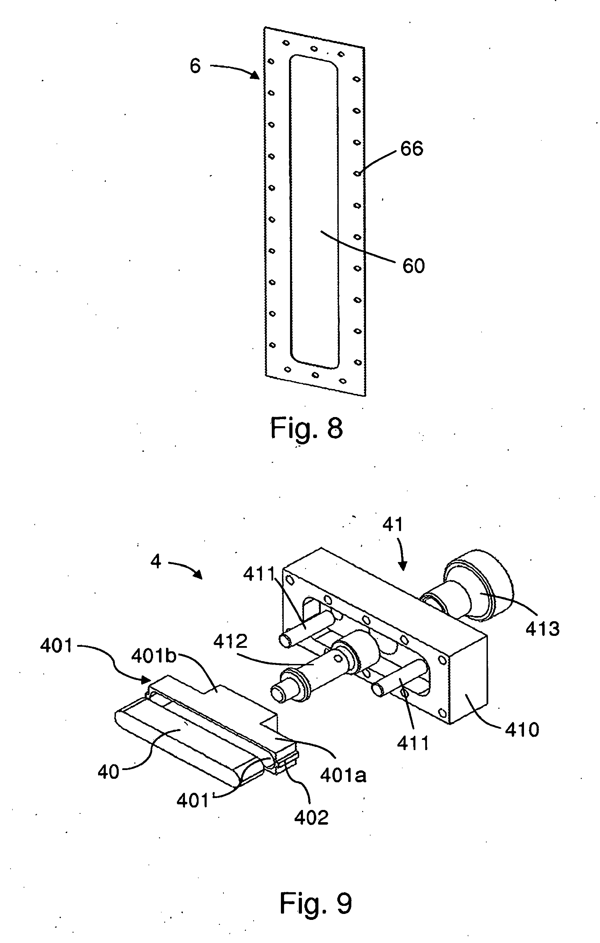

The column 100 also comprises an intermediate plate 6 shown in Figure 8, which is disposed between the two blocks 1 and 2 of said column 100 prior to joining them, said intermediate plate 6 comprising a window 60 that corresponds with a main chamber 3, so that said main chamber 3 is delimited by the intermediate plate 6, the internal elements 12 and 22 of the blocks 1 and 2, and by the insulating members disposed in the housings 18 and 28 of said internal elements 12 and 22. The intermediate plate 6 is preferably made of polyethylene, so that it is easily machineable and allows plates of a reduced thickness to be obtained easily.

The opening and closure system 4, shown in Figure 9, comprises a hatch 40 that moves when said opening and closure system 4 divides the main chamber 3 into a plurality of auxiliary chambers, extending along the entire width of the main chamber 3, insulating in a sealed manner an auxiliary chamber of the adjacent auxiliary chamber, and actuator means 41 that cause the movement of said hatch 40 so that it produces said division of said main chamber 3. The hatch 40 is made of a non-porous material (or a non-porous composition comprising of a plurality of materials), preferably rubber, so that an auxiliary chamber is insulated in a sealed manner from the adjacent auxiliary chambers. The column 100 comprises as many opening and closure systems 4 as it requires auxiliary chambers, minus one.

The actuator means 41 comprise a support 410 that is fixed to the external surface of an external element or plate 11 or 21 of one of the blocks 1 and 2 of the column 100, and a movement member 412 that extends longitudinally from said support 410 towards the inside of the corresponding block 1 or 2 and which causes the movement of the hatch 40. The opening and closure system 4 comprises a hatch support 401 to which is fixed the hatch 40. Preferably, said hatch support 401 comprises a housing 401' where the hatch 40 is partially disposed, part of said hatch 40 projecting out of said housing 401', with said element that projects out of the hatch 40 having the function of dividing the main chamber 3 and insulating the two adjacent auxiliary chambers resulting from the division from each other. Preferably, the movement member 412 corresponds with a threaded shaft and the hatch support 401 comprises a threaded housing (not shown in the figures) where said threaded shaft is disposed, the movement of said hatch support 401 and, therefore, said hatch 40 being caused when said threaded shaft is activated. The actuator means 41 comprise an actuator 413 that has the function of causing the activation of the movement member 412, said actuator 413 preferably comprising a keypad switch that a user turns to cause said activation. The hatch support 401 preferably comprises a T shape, the housing 401' for the hatch 40 being in a transverse segment 401 a of said hatch support 401 and the threaded housing for the threaded shaft being in a longitudinal segment 401 b of said hatch support 401.

The closure and opening system 4 also comprises at least one stopper part 411 that preferably corresponds with a rod that extends longitudinally from the support 410 to the inside of the block 1 or 2, which acts as a stopper on the movement of the hatch support 401 and, therefore, of the hatch 40 when said hatch support 401 moves in the direction in which the hatch 40 stops dividing the main chamber 3 (and/or stops dividing two adjacent auxiliary chambers). As a result, when the closure and opening systems 4 open, all the hatches 40 of the various closure and opening systems 4 are situated in the same position (aligned vertically). Each closure and opening system 4 preferably comprises two stopper parts 411.

The block 1 or 2 to which the opening and closure system 4 is fixed, preferably to the extraction block 2, comprises a window 7 for each opening and closure system 4, on which is disposed said opening and closure system 4, so that the movement member 412, the stopper part 411, the hatch support 401 and the hatch 40 pass through said window 7. The closure and opening system 4 can also comprise a hollow guiding part (not shown in the figures) that is fixed to the corresponding window 7, and which comprises a groove that cooperates with a projection 402 of the hatch support 401 to guide the movement of said hatch support 401 and, therefore, of the hatch 40.

Below is described a method for the manufacture or assembly of a thermogravitational column that is designed to enable the preparation of samples of a gaseous fluid for their subsequent analysis.

In a first step the elements 11 and 12 are joined to each other to form an extraction block 1. In order to join said elements 11 and 12 together, a tightening pin or equivalent member is disposed in at least one connecting hole 17 of the internal element 12 and a guide bush or equivalent member in at least one corresponding connecting hole 16 of the external element 11, the insulating members are fitted in the corresponding housings 14 and said elements 11 and 12 are joined together, the pins and guide bushes being used for this purpose and which guide the arrangement of said elements 11 and 12 and screws or equivalent means for joining them. Checks are then preferably made to ascertain whether there is a leak in the extraction block 1. In a second step of the method of the invention the elements 21 and 22 are joined together to form an inclusion block 2, in a similar manner to the connection of the extraction block 1, with checks also being made to ascertain whether there is a leak in said inclusion block 2. Once the inclusion block 2 has been formed, the inclusion joint members 800' are disposed in said inclusion block 2 to allow gaseous fluid to enter and reach main chamber 3, and checks are made to ensure this element of the inclusion block 2 does not suffer a leak (either of gaseous fluid or auxiliary fluid). The blocks 1 and 2 can also be formed in reverse order, first the inclusion block 2 and then the extraction block 1 being mounted. The two blocks 1 and 2 can even be mounted at the same time.

In the following phase the intermediate plate 6 is disposed between the two preformed blocks 1 and 2 so that the two blocks 1 and 2 can be joined together, said intermediate plate 6 being fixed in an intermediate position between said blocks 1 and 2. For this purpose connecting means 9 that pass through the four elements 11, 12, 21 and 22 of both blocks 1 and 2 and the intermediate plate 6, through the corresponding connecting holes 16', 17' 26', 27' and 66, are used. When the blocks 1 and 2 and the intermediate plate 6 have been joined together, checks are made to ascertain whether the resulting unit has any leaks or not.

As a result, during the manufacture of the column 100 three seal checks are performed to ascertain whether there are any leaks:
1. Checks to ensure the extraction block 1 is sealed.
2. Checks to ensure the inclusion block 2 is sealed.
3. Checks to ensure the final unit (column 100), formed by the blocks 1 and 2 and the intermediate plate 6 is sealed.

The required opening and closure systems 4 may be fixed to the corresponding block 1 or 2 when said block 1 or 2 is formed, before the two blocks 1 and 2 are joined or preferably when said blocks 1 and 2 have been joined together, the intermediate plate 6 disposed between them, by means of connecting means such as screws.

Another aspect of the invention relates to a measuring method implemented with the thermogravitational column designed for measuring the properties of a gaseous fluid, which is described below.

First of all the auxiliary fluid is introduced into each of the corresponding blocks 1 and 2 to obtain the temperature gradient in the main chamber 3 (cold in one of them and hot in the other). When said temperature gradient has been obtained (it can be determined after a preset period of time has elapsed or by means of temperature sensors, for example) the gaseous fluid, the properties of which are to be analysed or measured, is introduced into said main chamber 3 through the inclusion joint member 800' of the corresponding filling hole, and said inclusion joint member 800' is plugged when the required amount of gaseous fluid is introduced. Following a preset rest period, which will depend on the temperature gradient used and on the composition of the gaseous fluid for example, the nanoparticles of said gaseous fluid are in equilibrium, having been redistributed throughout the entire volume they are disposed with inside the main chamber 3, different concentrations thereby being obtained at different points of the column 100 (of the main chamber 3). If in this state gaseous fluid is extracted from said main chamber 3 in order to measure its properties, said gaseous fluid will have a tendency to expand inside said main chamber 3 and the original distributions of the nanoparticles will change, correct data at two different points (or different heights) of said main chamber 3 not being capable of being obtained. Thus, at this point and with the gaseous fluid in equilibrium, the opening and closure system 4 is acted on, causing the hatches 40 to divide the main chamber 3 into a plurality of auxiliary chambers, insulated in a sealed manner from each other. As a result, if gaseous fluid is extracted from one of the auxiliary chambers through corresponding extraction joint members 19' disposed in outlet holes 19 formed in the extraction block 1, in parts 11 and 12 of said extraction block 1, the concentration of nanoparticles in the rest of the auxiliary chambers is not affected and can be measured at a later stage. The column 100 can also comprise joint members 8' disposed in holes 8 connecting the exterior to the main chamber 3 through the inclusion block 2 so that pure aerosol can be introduced into the auxiliary chambers when gaseous fluid is extracted from said auxiliary chambers, providing continuity to the system.

Preferably, the aforementioned checks for ascertaining whether there are leaks or not in the extraction block 1 are also made when said extraction block 1 has been fully mounted, in other words once the joint members 150, 150' and 19' have also been mounted. Similarly, checks are also made to ascertain whether or not there are leaks in said inclusion block 2 when said inclusion block 2 has been fully mounted, in other words once the joint members 8', 800', 250 and 250' have also been mounted.

The column 100 forms part of the installation adapted for measuring the properties of a gaseous fluid, and more specifically properties relating to different concentrations of the nanoparticles of said gaseous fluid due to gravity. In addition to said column 100, said installation comprises other elements not shown in the figures such as: conventional measuring devices, such as CPCs (Condensation Particle Counters), which have the function of measuring or analysing properties; load means for introducing auxiliary fluids into the corresponding chambers 13 and 23, which can be conventional and amount to one for each auxiliary fluid; main load means for introducing the gaseous fluid into the main chamber 3, and extraction means for extracting the auxiliary fluids and the gaseous fluid from the column 100 (a function that can also be performed by the corresponding load means).

The column 100 comprises an outlet hole 19 associated to each auxiliary chamber to extract the gaseous fluid from its interior for its measurement, which is a through hole, which passes through the elements 11 and 12, and which preferably comprises a smaller diameter in the internal element 12 than in the external plate 11, as can be deduced from the figures, so that very regular surfaces of said internal elements 12 in contact with the gaseous fluid of the main chamber 3 are obtained, thereby facilitating the distribution of the nanoparticles of said gaseous fluid all along said main chamber 3. The diameter in said internal elements 12 and 22 is preferably approximately 0.2 millimetres.

In the preferred embodiment, the column 100 comprises two filling holes, both of them in the inclusion block 2, one in the top part and the other in the bottom, and a inclusion joint member 800' disposed vertically for each inlet hole, and the gaseous fluid is introduced into the main chamber 3 through the filling hole disposed further down. During the process for the filling of the main chamber 3, as gaseous fluid is introduced into said main chamber 3, said gaseous fluid is extracted through a filling hole disposed in the top part of the column 100 until it is determined that the concentration of gaseous fluid yields a substantially constant value. To achieve this a conventional measuring device, such as a CPC (Condensation Particle Counters), is connected to the top filling hole, through which it receives gaseous fluid originating from the main chamber 3, and said device determines the concentration of said gaseous fluid. At this point the corresponding inclusion joint members 800' close. To determine the concentration of the gaseous fluid when said fluid is extracted from the auxiliary chambers conventional measuring devices such as CPCs (Condensation Particle Counters) can be used. This is because nanoparticles become electrically charged very quickly when working with them and there is a risk of them sticking to the surfaces of the parts 12 and/or 22 that delimit the main chamber 3, despite said surfaces having previously, and preferably, been subjected to an anodising process to reduce said risk.

## Claims

1. Thermogravitational column for preparing a measurement of the properties of gaseous fluids comprising nanoparticles, wherein
it comprises
an extraction block (1),
an inclusion block (2) facing and joined to the extraction block (1), and
a main chamber (3) defined between said blocks (1, 2), where a gaseous fluid is disposed, **characterized in that** the thermogravitational column further comprises
at least one opening and closure system (4) adapted to divide the main chamber (3) into a plurality of sealed auxiliary chambers when the gaseous fluid is disposed, and in equilibrium, in said main chamber (3), and
an outlet hole (19) associated to each auxiliary chamber to extract the gaseous fluid from its interior for its measurement.

2. Column according to claim 1, wherein the opening and closure system (4) comprises a hatch (40) to insulate in a sealed manner an auxiliary chamber from the adjacent auxiliary chambers when the main chamber (3) is divided into a plurality of auxiliary chambers, and actuator means (41) that cause the movement of said hatch (40) so that it produces said division of said main chamber (3).

3. Column according to claim 2, wherein at least one of the blocks (1, 2) of the column (100) comprises an opening window (7) for each opening and closure system (4), on which is disposed the closure and opening system (4).

4. Column according to claim 3, wherein the closure and opening system (4) is fixed to the block (1, 2), the block (1, 2) comprising an opening window (7), and the hatch (40) and the actuator means (41) of the closure and opening system (4) passing through said opening window (7).

5. Column according to any of claims 3 or 4, comprising a plurality of closure and opening systems (4), the corresponding block (1, 2) comprising an opening window (7) for each closure and opening system (4).

6. Column according to any of claims 2 to 5, wherein the hatch (40) is made of a non-porous material.

7. Column according to any of claims 2 to 5, wherein the hatch (40) is made of rubber.

8. Column according to any of the preceding claims, wherein each block (1, 2) of the column (100) comprises an external element (11; 21) and an internal element (12; 22), a chamber (13; 23) being defined between both elements (11, 12; 21, 22) to house an auxiliary fluid to heat or cool the corresponding block (1, 2), the main chamber (3) being defined between the internal elements (11; 21) of said blocks (1, 2).

9. Column according to claim 8, comprising an intermediate plate (6) disposed between the internal elements (12, 22) of the blocks (1, 2) of the column (100), said intermediate plate, (6) comprising a window (60) that corresponds with the main chamber (3), said main chamber (3) being delimited by said intermediate plate (6) and by the internal elements (12, 22) of the blocks (1, 2) of the column (100).

10. Column according to either of claims 8 or 9, wherein the elements (11, 12; 21, 22) of the blocks (1, 2) of the column (100) are made of anodised aluminium.

11. Column according to any of the preceding claims, wherein the blocks (1, 2) of the column (100) are substantially rectangular.

12. Column according to any of the preceding claims, wherein the inclusion block (2) of the column (100) comprises at least one filling hole, through which the gaseous fluid is introduced into the main chamber (3).

13. Column according to any of the preceding claims, comprising at least one insulation member disposed between the two blocks (1, 2) of the column (100), which extends all along the perimeter of the main chamber (3) to close said main chamber (3) in a sealed manner.

14. Method for preparing a measurement of the properties of gaseous fluids in the form of nanoparticles in a thermogravitational column,
comprising the following stages:
the exposure of blocks (1,2) of the column (100) that are joined together to different temperatures, a temperature gradient being obtained on both sides of a main chamber (3) comprised between the two blocks (1, 2), and
the introduction of a gaseous fluid into the main chamber (3),
**characterised in that**
said method also comprises a stage in which the main chamber (3) is divided into a plurality of auxiliary chambers when the gaseous fluid has reached a state of equilibrium inside said main chamber (3),
the gaseous fluid being extracted from one of the auxiliary chambers through corresponding extraction joint members (19') disposed in outlet holes (19) formed in an extraction block (1).

15. Method according to claim 14, wherein in order to expose the blocks (1,2) to different temperatures to obtain a temperature gradient on both sides of the main chamber (3), a hot auxiliary fluid is introduced into one of the blocks (1, 2) and a cold auxiliary fluid in the other block (1, 2).

## Patentansprüche

1. Thermogravitationale Säule zur Vorbereitung einer Messung der Eigenschaften von gasförmigen Fluiden mit Nanopartikeln, wobei sie Folgendes umfasst;
einen Extraktionsblock (1),
einen Inklusionsblock (2), der dem Extraktionsblock (1) gegenüber liegt und damit verbunden ist,
eine Hauptkammer (3), die zwischen den Blöcken (1, 2) definiert ist, in der ein gasförmiges Fluid angeordnet ist,
**dadurch gekennzeichnet, dass** die thermogravitationale Säule weiter Folgendes umfasst:
mindestens ein Öffnungs- und Verschlusssystem (4), das ausgelegt ist, um die Hauptkammer (3) in eine Vielzahl von abgedichteten Hilfskammern zu unterteilen, wenn das gasförmige Fluid in der Hauptkammer (3) angeordnet und in Gleichgewicht ist, und
ein Ausgangsloch (19), das mit jeder Hilfskammer assoziiert ist, um das gasförmige Fluid von ihrem inneren für seine Messung zu extrahieren.

2. Säule nach Anspruch 1, wobei das Öffnungs- und Verschlusssystem (4) eine Klappe (40) umfasst, um auf eine abgedichtete Weise eine Hilfskammer von den benachbarten Hilfskammern zu isolieren, wenn die Hauptkammer (3) in eine Vielzahl von Hilfskammern unterteilt ist, und Betätigungsmittel (41), die die Bewegung der Klappe (40) hervorrufen, so dass sie die Unterteilung der Hauptkammer (3) erzeugt.

3. Säule nach Anspruch 2, wobei mindestens einer der Blöcke (1, 2) der Säule (100) ein Öffnungsfenster (7) für jedes Öffnungs- und Verschlusssystem (4) umfasst, auf dem das Verschluss und Öffnungssystem (4) angeordnet ist.

4. Säule nach Anspruch 3, wobei das Verschluss und Öffnungssystem (4) an den Block (1, 2) fixiert ist, wobei der Block (1, 2) ein Öffnungsfenster (7) umfasst, und wobei die Klappe (40) und das Betätigungsmittel (41) des Verschluss- und Öffnungssystems (4) durch das Öffnungsfenster (7) verlaufen.

5. Säule nach einem der Ansprüche 3 oder 4, umfassend eine Vielzahl von Verschluss- und Öffnungssystemen (4), wobei der entsprechende Block (1, 2) ein Öffnungsfenster (7) für jedes Verschluss- und Öffnungssystem (4) umfasst.

6. Säule nach einem der Ansprüche 2 bis 5, wobei, die Klappe (40) aus einem nicht porösen Material hergestellt ist.

7. Säule nach einem der Ansprüche 2 bis 5, wobei, die Klappe (40) aus Gummi hergestellt ist.

8. Säule nach einem der vorhergehenden Ansprüche, wobei jeder Block (1, 2) der Säule (100) ein äußeres Element (11; 21) und ein inneres Element (12; 22) umfasst, wobei eine Kammer (13; 23) zwischen beiden Elementen (11, 12; 21, 22) definiert ist, um ein Hilfsfluid aufzunehmen, um den entsprechenden Block (1, 2) zu erwärmen oder zu kühlen, wobei die Hauptkammer (3) zwischen den inneren Elementen (11, 21) des Blocks (1, 2) definiert sind.

9. Säule nach Anspruch 8, umfassend eine Zwischenplatte (6), die zwischen den inneren Elementen (12, 22) der Blöcke (1, 2) der Säule (100) angeordnet ist, wobei die Zwischenplatte (6) ein Fenster (60) umfasst, das der Hauptkammer (3) entspricht, wobei die Hauptkammer (3) durch die Zwischenplatte (6) und durch die inneren Elemente (12, 22) der Blöcke (1, 2) der Säule (100) begrenzt ist.

10. Säule nach einem der Ansprüche 8 oder 9, wobei die Elemente (11, 12; 21, 22) der Blöcke (1, 2) der Säule (100) aus einem anodisierten Aluminium hergestellt sind.

11. Säule nach einem der vorhergehenden Ansprüche, wobei die Blöcke (1, 2) der Säule (100) im Wesentlichen rechtwinklig sind.

12. Säule nach einem der vorhergehenden Ansprüche, wobei der Inklusionsblock (2) der Säule (100) mindestens ein Füll loch umfasst, durch das das gasförmige Fluid in die Hauptkammer (3) eingeführt wird.

13. Säule nach einem der vorhergehenden Ansprüche, umfassend mindestens ein Isolierelement, die zwischen den zwei Blöcken (1, 2) der Säule (100) angeordnet ist, das sich entlang des gesamten Umfangs der Hauptkammer (3) erstreckt, um die Hauptkammer (3) auf eine abgedichtete Weise zu schließen.

14. Verfahren zur Vorbereitung einer Messung der Eigenschaften von gasförmigen Fluiden in Form von Nanopartikeln in einer thermogravitationalen Säule, umfassend die folgenden Schritte:
das Aussetzen von Blöcken (1, 2) der Säule (100), die zu verschiedenen Temperaturen verbunden sind, wobei ein Temperaturgradient auf beiden Seiten einer Hauptkammer (3) erhalten wird, der zwischen den zwei Blöcken (1, 2) enthalten ist, und
das Einführen einer gasförmigen Flüssigkeit in die Hauptkammer (3),
**dadurch gekennzeichnet, dass**
das Verfahren auch einen Schritt umfasst, in dem die Hauptkammer (3) in eine Vielzahl von Hilfskammern unterteilt wird, wenn das gasförmige Fluid einen Zustand des Gleichgewichts in der Hauptkammer (3) erreicht hat,
wobei das gasförmige Fluid aus einer der Hilfskammern durch entsprechende Extraktionsverbindungselemente (19') extrahiert wird, die in Ausgangslöchern (19) angeordnet sind, die in einem Extraktionsblock (1) gebildet sind.

15. Verfahren nach Anspruch 14, wobei um die Blöcke (1, 2) verschiedenen Temperaturen auszusetzen, um einen Temperaturgradienten auf beiden Seiten der Hauptkammer (3) zu erhalten, ein heißes Hilfsfluid in einen der Blöcke (1, 2) und ein kaltes Hilfsfluid in den anderen Block (1, 2) eingeführt wird.

## Revendications

1. Colonne thermo-gravitationnelle pour préparer une mesure des propriétés de fluides gazeux comprenant des nanoparticules,
dans laquelle, elle comprend :
un bloc d'extraction (1),
un bloc d'inclusion (2) faisant face et étant assemblé au bloc d'extraction (1),
une chambre principale (3) définie entre lesdits blocs (1, 2), dans laquelle un fluide gazeux est disposée,
**caractérisé en ce que** la colonne thermo-gravitationnelle comprend en outre :
au moins un système d'ouverture et de fermeture (4) adapté pour diviser la chambre principale (3) en une pluralité de chambres auxiliaires scellées lorsque le fluide gazeux est disposé, et en équilibre, dans ladite chambre principale (3), et
un trou de sortie (19) associé à chaque chambre auxiliaire pour extraire de fluide gazeux de son intérieur pour sa mesure.

2. Colonne selon la revendication 1, dans laquelle le système d'ouverture et de fermeture (4) comprend une trappe (40) pour isoler, d'une manière étanche, une chambre auxiliaire des chambres auxiliaires adjacentes, lorsque la chambre principale (3) est divisée en une pluralité de chambres auxiliaires, et des moyens actionneurs (41) qui provoquent le déplacement de ladite trappe (40) de sorte qu'elle produit ladite division de ladite chambre principale (3).

3. Colonne selon la revendication 2, dans laquelle au moins l'un des blocs (1, 2) de la colonne (100) comprend une fenêtre d'ouverture (7) pour chaque système d'ouverture et de fermeture (4), sur laquelle est disposé le système de fermeture et d'ouverture (4).

4. Colonne selon la revendication 3, dans laquelle le système de fermeture et d'ouverture (4) est fixé sur le bloc (1, 2), le bloc (1, 2) comprenant une fenêtre d'ouverture (7), et la trappe (40) et les moyens actionneurs (41) du système de fermeture et de fermeture (4) passant par ladite fenêtre d'ouverture (7).

5. Colonne selon l'une quelconque des revendications 3 ou 4, comprenant une pluralité de systèmes de fermeture et d'ouverture (4), le bloc (1, 2) correspondant comprenant une fenêtre d'ouverture (7) pour chaque système de fermeture et d'ouverture (4).

6. Colonne selon l'une quelconque des revendications 2 à 5, dans laquelle la trappe (40) est réalisée à partir d'un matériau non poreux.

7. Colonne selon l'une quelconque des revendications 2 à 5, dans laquelle la trappe (40) est réalisée à partir de caoutchouc.

8. Colonne selon l'une quelconque des revendications précédentes, dans laquelle chaque bloc (1, 2) de la colonne (100) comprend un élément externe (11 ; 21) et un élément interne (12 ; 22), une chambre (13 ; 23) étant définie entre deux éléments (11, 12 ; 21, 22) afin de loger un fluide auxiliaire pour chauffer ou refroidir le bloc (1, 2) correspondant, la chambre principale (3) étant définie entre les éléments internes (11 ; 21) desdits blocs (1, 2).

9. Colonne selon la revendication 8, comprenant une plaque intermédiaire (6) disposée entre les éléments internes (12, 22) des blocs (1, 2) de la colonne (100), ladite plaque intermédiaire (6) comprenant une fenêtre (60) qui correspond à la chambre principale (3), ladite chambre principale (3) étant délimitée par ladite plaque intermédiaire (6) et par les éléments internes (12, 22) des blocs (1, 2) de la colonne (100).

10. Colonne selon les revendications 8 ou 9, dans laquelle les éléments (11, 12 ; 21, 22) des blocs (1, 2) de la colonne (100) sont réalisés à partir d'aluminium anodisé.

11. Colonne selon l'une quelconque des revendications précédentes, dans laquelle les blocs (1, 2) de la colonne (100) sont sensiblement rectangulaires.

12. Colonne selon l'une quelconque des revendications précédentes, dans laquelle le bloc d'inclusion (2) de la colonne (100) comprend au moins un trou de remplissage, à travers lequel le fluide gazeux est introduit dans la chambre principale (3).

13. Colonne selon l'une quelconque des revendications précédentes, comprenant au moins un élément d'isolation disposé entre les deux blocs (1, 2) de la colonne (100), qui s'étend tout le long du périmètre de la chambre principale (3) pour fermer ladite chambre principale (3) d'une manière étanche.

14. Procédé pour préparer une mesure des propriétés de fluides gazeux se présentant sous la forme de nanoparticules dans une colonne thermo-gravitationnelle, comprenant les étapes suivantes consistant à :
exposer les blocs (1, 2) de la colonne (100) qui sont assemblés à différentes températures, un gradient de température étant obtenu des deux côtés d'une chambre principale (3) comprise entre les deux blocs (1, 2), et
introduire un fluide gazeux dans la chambre principale (3),
**caractérisé en ce que** :
ledit procédé comprend également une étape dans laquelle la chambre principale (3) est divisée en une pluralité de chambres auxiliaires lorsque le fluide gazeux a atteint un état d'équilibre à l'intérieur de ladite chambre principale (3),
le fluide gazeux étant extrait de l'une des chambres auxiliaires par des éléments de joint d'extraction (19') correspondants disposés dans les trous de sortie (19) formés dans un bloc d'extraction (1).

15. Procédé selon la revendication 14, dans lequel afin d'exposer les blocs (1, 2) à différentes températures afin d'obtenir un gradient de température des deux côtés de la chambre principale (3), un fluide auxiliaire chaud est introduit dans l'un des blocs (1, 2) et un fluide auxiliaire froid dans l'autre bloc (1, 2).
